# FASCICULE DE BREVET EUROPEEN

(11) **EP 1 551 213 B1**
(45) Date de publication et mention de la délivrance du brevet: **22.08.2007**
(21) Numéro de dépôt: 03780216.2
(22) Date de dépôt: 13.10.2003
(51) Int. Cl.: A01B 15/16, A01B 21/08, A01B 23/06

(54) **DECHAUMEUSE DE PRECISION ET DISPOSITIF DE SECURITE POUR UNE TELLE DECHAUMEUSE**
SCHÄLPFLUG UND SICHERHEITSVORRICHTUNG FÜR EINEN ENTSPRECHENDEN SCHÄLPFLUG
PRECISION DISC TILLER AND SAFETY DEVICE THEREFOR

(30) Priorité: 14.10.2002 FR 0212713
(43) Date de publication de la demande: 13.07.2005
(73) Titulaire: Evin, Michel, 44850 Ligne (FR)
(72) Inventeur: Evin, Michel, 44850 Ligne (FR)
(74) Mandataire: Laget, Jean-Loup
(86) Numéro de dépôt international: PCT/FR2003/003009
(87) Numéro de publication internationale: WO 2004/034768

(56) Documents cités:
- FR-A- 2 658 979
- FR-A- 2 813 749
- US-A- 2 750 861
- US-A- 3 640 348
- US-B1- 6 412 571

## Description

La présente invention concerne une déchaumeuse de précision du type comprenant un châssis porté ou traîné, équipé d'outils aratoires constitués d'au moins un train de disques déchaumeurs rotatifs non moteurs, ces disques travaillant dans le sol suivant un terrage réglable de préférence par l'intermédiaire d'au moins un organe de référence, tel que patin, roue ou rouleau couplé audit châssis et étant montés respectivement indépendants et oscillants par rapport au châssis porteur par l'intermédiaire d'un dispositif de sécurité autorisant, lorsque la pression exercée sur le disque est supérieure à une pression prédéterminée, un dégagement vertical du disque et en deçà de ladite pression un retour du disque en position de travail ainsi qu'un dispositif de sécurité pour une déchaumeuse du type précité.

Les déchaumeuses sont aujourd'hui bien connues à ceux versés dans cet art. Ces déchaumeuses sont généralement constituées d'un châssis porteur d'un ou plusieurs trains de disques. Chaque disque ou groupe de disques peut être couplé au châssis suivant essentiellement deux méthodes. La première méthode consiste à monter les disques de manière fixe sur le châssis. Ces disques peuvent toutefois être couplés au châssis de manière à pouvoir pivoter autour d'un axe vertical permettant une orientation des disques par rapport à l'axe d'avancement du châssis. Tel est le cas notamment des disques décrits dans les brevets US-A-2.659.291 et US-A-2.768.864. Toutefois, l'absence de possibilité de dégagement des disques engendre plusieurs inconvénients, à savoir notamment une absence de précision du travail opéré par la déchaumeuse du fait que, lorsqu'un disque rencontre un obstacle, il en résulte un soulèvement partiel du châssis de telle sorte qu'une partie des autres disques ne peut plus travailler. Parallèlement, l'absence de dégagement d'un disque lors de la rencontre d'un obstacle peut générer une usure prématurée de ce disque, voire une casse de ce disque. De ce fait, un montage rigide du disque par rapport au châssis porteur ne permet pas la réalisation d'une déchaumeuse de précision apte à travailler à des profondeurs déterminées et à des vitesses élevées de telle sorte qu'une telle déchaumeuse ne peut pas non plus comporter d'éléments semeurs comme cela est apparu ces dernières années sur ce type de machine.

Pour résoudre ces problèmes, il est donc apparu récemment sur le marché, en particulier à travers la demande de brevet français FR-A-2.813.749, des déchaumeuses du type comprenant un châssis porté ou traîné équipé d'outils aratoires constitués d'au moins un train de disques déchaumeurs rotatifs non moteurs, chaque disque déchaumeur étant monté indépendant et oscillant par rapport au châssis porteur de la déchaumeuse de manière à céder sous une pression prédéterminée réglable. Dans cette demande de brevet antérieure, chaque disque déchaumeur est relié au châssis par l'intermédiaire d'un organe de liaison, tel qu'un bras, monté à pivotement sur ledit châssis autour d'un axe sensiblement parallèle à l'axe de rotation du disque déchaumeur, ledit bras coopérant avec un élément de précontrainte de manière à n'autoriser le pivotement du bras dans le sens d'un effacement du disque par soulèvement que, lorsque la pression exercée sur le disque devient supérieure à la pression de tarage de l'élément de précontrainte. Le retour à la position de travail s'effectue automatiquement sous la double sollicitation de la réaction de l'élément de précontrainte et du poids du disque. Une telle solution permet, en cas d'obstacle à franchir par l'un des disques, d'éviter le soulèvement de la totalité du châssis portant les disques. Il en résulte un travail du sol amélioré et à une profondeur constante. Toutefois, comme de telles machines sont équipées d'un grand nombre de disques, la complexité du dispositif nécessitant à la fois la présence d'un bras rigide et d'un élément de précontrainte rend la machine complexe et onéreuse. Par ailleurs, le grand nombre de disques engendre une distance entre disques extrêmement faible. Il est donc nécessaire de disposer d'un axe de liaison du bras porte-disque à la pièce support extrêmement court. Il peut en résulter une usure rapide et prématurée de tels dispositifs. Par ailleurs, les disques ayant tendance à exercer un effort latéral dans le sol, cet effort latéral tend à accroître l'usure.

On connaît par ailleurs, à travers les brevets US-A-3.640.348 et US-A-2.750.861 des engins agricoles comprenant un disque couplé au châssis porteur dudit engin par l'intermédiaire d'un ressort. Dans le cas du brevet US-A-2.750.861, le disque est un disque ouvreur d'un semoir destiné à creuser un sillon. Ce disque est équipé d'une chape en U, cette chape en U étant couplée au châssis porteur par l'intermédiaire d'un ressort à lame. Ce ressort, du fait qu'il s'agit d'un ressort à lame, oblige à la réalisation d'une chape en U pour éviter toute oscillation latérale du disque. Il en résulte donc, du fait de la présence de cette chape, une solution lourde et onéreuse. A l'inverse, la présence de cette chape empêche tout dégagement ou échappement latéral du disque en cas de rencontre avec un obstacle. Dans le cas du brevet US-A-3.640.348, qui s'applique plus particulièrement à des engins de type "covercrop" où l'ensemble des disques sont montés sur une même poutre support, chaque disque est relié à la poutre support par l'intermédiaire d'un ressort à lame en forme de S. A nouveau, soit il n'est prévu aucun élément de guidage du disque et on constate une oscillation latérale permanente de ce disque, soit il est nécessaire de renforcer la tenue latérale de ce disque par une pièce de maintien appropriée au risque d'augmenter à la fois le poids et le coût d'une telle installation.

Enfin, il est connu, dans un tout autre domaine d'application, à travers le brevet FR-A-2.658.979, la combinaison d'un disque destiné à réaliser une opération de traçage au sol et d'un ressort spiralé affectant la forme d'un point d'interrogation. La réalisation d'un ressort spiralé ne permet pas d'éviter le débattement latéral du disque.

Un but de la présente invention est donc de proposer une déchaumeuse de précision dont les disques sont reliés au châssis porteur par l'intermédiaire d'un dispositif autorisant un montage indépendant et oscillant des disques par rapport au châssis porteur tout en permettant de réduire l'usure des pièces de liaison d'un tel dispositif et de simplifier la conception d'un tel dispositif.

Un autre but de l'invention est de proposer une déchaumeuse de précision dont la conception des dispositifs de sécurité autorise le montage d'un plus grand nombre de disques pour une largeur hors tout de la machine inchangée en raison du faible encombrement de tels dispositifs.

Un autre but de l'invention est de proposer une déchaumeuse de précision dont la conception des dispositifs de sécurité permet un échappement des disques suivant un dégagement vertical ou suivant un dégagement latéral de telle sorte que le dispositif de sécurité peut être considéré comme apte à travailler dans les trois dimensions.

Un autre but de l'invention est de proposer une déchaumeuse de précision dont la conception des dispositifs de sécurité permet, du fait du caractère asymétrique de ces dispositifs, de répondre parfaitement aux contraintes des disques déchaumeurs qui possèdent au moins un angle d'ouverture et généralement un angle d'entrure et qui sont donc, pour ces raisons, soumis à des contraintes latérales asymétriques parfaitement maîtrisées par le caractère asymétrique des dispositifs de sécurité.

A cet effet, l'invention a pour objet une déchaumeuse de précision du type comprenant un châssis porté ou traîné, équipé d'outils aratoires constitués d'au moins un train de disques déchaumeurs rotatifs non moteurs, ces disques présentant au moins un angle d'ouverture et étant montés respectivement indépendants et oscillants par rapport au châssis porteur par l'intermédiaire d'un dispositif de sécurité autorisant, lorsque la pression exercée sur le disque est supérieure à une pression prédéterminée, un dégagement vertical du disque et en deçà de ladite pression un retour du disque en position de travail, caractérisée en ce que chaque disque déchaumeur est un disque concave et relié au châssis par un ressort hélicoïdal formant au moins une spire, de préférence au moins une spire et demi, de manière à créer, au niveau du ressort, une zone de chevauchement, une extrémité du ressort étant couplable directement ou par l'intermédiaire d'une pièce de liaison au châssis tandis que l'autre extrémité du ressort est couplable au moyeu du disque et est disposée côté concave du disque, ce ressort étant orienté de manière telle que la ou les spires dudit ressort se resserrent par enroulement lorsque la pression exercée sur le disque est supérieure à la pression prédéterminée en autorisant un effacement vertical du disque par soulèvement.

Grâce à la conception du dispositif de sécurité formé par un simple ressort hélicoïdal, le disque peut évoluer dans les trois dimensions. Il en résulte ainsi la possibilité pour le disque d'échapper, par dégagement vertical et/ou latéral, à un obstacle. En outre, il devient aisé, en agissant sur la section des éléments servant à la formation des spires du ressort et/ou sur le nombre de spires et/ou la nature du matériau constitutif des éléments, de définir avec précision les réactions du ressort de manière à éviter un pianotage intempestif des disques et à limiter le débattement latéral autorisé des disques. On obtient ainsi les mêmes avantages que ceux obtenus à partir d'un bras pivotant équipé d'un élément de précontrainte avec une pièce de conception extrêmement simple et dont l'usure peut être limitée et réduite dans le temps du fait de la suppression de toute pièce d'articulation type axe pivot.

Selon une forme de réalisation préférée de l'invention, chaque disque déchaumeur présente au moins un angle d'ouverture et de préférence un angle d'entrure provoquant l'exercice de contraintes latérales généralement obliques sur le disque au cours de l'avancement du châssis et en ce que les flancs de la ou des spires du ressort hélicoïdal sont disposés par rapport au disque en tendant à se rapprocher les unes des autres sous l'action de cette contrainte latérale de manière à limiter l'action de cette contrainte latérale. En d'autres termes, la contrainte latérale exercée par le disque tend à provoquer un enroulement de la ou des spires provoquant un resserrement de la ou des spires jusqu'à une position de butée.

L'invention a également pour objet un dispositif de sécurité pour disque déchaumeur concave pour déchaumeuse du type comprenant un châssis porté ou traîné équipé d'outils aratoires constitués d'au moins un train de disques déchaumeurs rotatifs non moteurs, ces disques travaillant dans le sol suivant un terrage réglable de préférence par l'intermédiaire d'au moins un organe de référence tel que patin, roue ou rouleau couplé audit châssis et étant montés montés respectivement indépendants et oscillants par rapport au châssis porteur, ce dispositif, interposable entre le châssis et un disque de manière à autoriser, lorsque la pression exercée sur le disque est supérieure à une pression prédéterminée, un dégagement vertical du disque et en deçà de ladite pression un retour du disque en position de travail, étant constitué d'un ressort hélicoïdal formé d'au moins une spire et demi, ce ressort qui présente une première extrémité couplable directement ou par l'intermédiaire d'une pièce de liaison au châssis étant, à l'état monté du dispositif, orienté de manière telle que la ou les spires dudit ressort se resserrent par enroulement lorsque la pression exercée sur le disque est supérieure à la pression prédéterminée en autorisant un effacement vertical de l'outil par soulèvement, caractérisé en ce que le ressort présente une seconde extrémité couplée au moyeu du disque à sécuriser et disposée côté concave du disque à sécuriser de manière à former une ensemble ressort/disque de faible encombrement.
L'invention sera bien comprise à la lecture de la description suivante d'exemples de réalisation, en référence aux dessins annexés dans lesquels :
la figure 1 représente une vue de dessus partiellement en perspective d'une déchaumeuse conforme à l'invention ;
la figure 2 représente une vue 3/4 arrière d'un dispositif de sécurité s'étendant entre le châssis porteur et un disque ;
la figure 3 représente une vue de face du dispositif de sécurité de la figure 2 et
la figure 4 représente une vue de côté du dispositif de sécurité de la figure 2.

Comme mentionné ci-dessus, la déchaumeuse de précision, objet de l'invention, comprend un châssis 2 porté ou traîné, équipé d'outils 3 aratoire. Le châssis 2 peut affecter un grand nombre de formes. Dans l'exemple représenté, ce châssis 2 est constitué d'un cadre formé de deux longerons reliés entre eux par des traverses constituées de poutres équipées des outils aratoires. Ces poutres s'étendent sensiblement perpendiculairement à la ligne de traction du châssis 2. Ce châssis 2 est en outre équipé d'un dispositif d'attelage à un véhicule tracteur. L'attelage sera de préférence de type trois points. Les outils aratoires sont constitués d'au moins un train de disques 3 déchaumeurs rotatifs non moteurs. Ce train de disques 3 s'étend le long d'une largeur de travail, c'est-à-dire le long d'une ligne perpendiculaire à la ligne de traction du châssis 2. Il est à noter que par disque déchaumeur non moteur, on entend des disques déchaumeurs dont l'entraînement en rotation est provoqué sous l'effet de la force de friction avec le sol, force générée par le déplacement du châssis tracté. Ces disques 3 travaillent dans le sol suivant un terrage réglable par l'intermédiaire d'au moins un organe 4 de référence tel que patin, roue ou rouleau couplé au châssis 2. De préférence, cet organe 4 de référence est commun à au moins trois disques 3 déchaumeurs, de préférence au moins cinq disques 3 déchaumeurs pour garantir un réglage de terrage adéquat. Dans les exemples représentés, l'organe 4 de réglage de terrage est constitué par un rouleau cage commun à l'ensemble des disques déchaumeurs du train arrière de la déchaumeuse. Ce rouleau cage 4 est couplé au châssis 2 par l'intermédiaire de deux bras s'étendant à l'arrière du cadre formant châssis, lesdits bras étant réglables en position sur le châssis 2. Ce réglage de terrage s'effectue par coopération de cet organe de référence avec le dispositif d'attelage. Ce réglage pourrait, de manière équivalente, s'effectuer également par le seul dispositif d'attelage.

Les outils aratoires constitués par les disques 3 déchaumeurs rotatifs non moteurs sont réalisés de manière telle que chaque disque 3 déchaumeur est monté indépendant et oscillant par rapport au châssis 2 porteur de la déchaumeuse de manière à s'escamoter sous une pression prédéterminée réglable et obtenir ainsi un travail de la terre à profondeur constante des disques 3 déchaumeurs. Chaque disque 3 est ainsi relié au châssis 2 par un ressort 6 hélicoïdal formant au moins une spire, de préférence au moins une spire et demi. Une extrémité 6A du ressort 6 est couplable directement ou par l'intermédiaire d'une pièce 7 de liaison au châssis 2 tandis que l'autre extrémité 6B du ressort 6 est couplable directement ou par l'intermédiaire d'une pièce de liaison au moyeu 8 du disque 3. Ce ressort 6 est orienté de manière telle que la ou les spires du ressort se resserrent par enroulement lorsque la pression exercée sur le disque 3 est supérieure à la pression prédéterminée en autorisant un effacement vertical du disque 3 par soulèvement.

Dans les exemples représentés, chaque disque 3 déchaumeur est un disque concave, de préférence de grand diamètre. En effet, le diamètre est généralement supérieur à 48 cm et de préférence au moins égal à 51 cm. L'extrémité 6B du ressort 6 couplée au moyeu 8 est disposée côté concave du disque 3. Cette disposition présente un certain nombre d'avantages. Elle permet tout d'abord de réduire l'encombrement de l'ensemble ressort/disque en vue de multiplier le nombre de disques sur une même déchaumeuse sans modifier la largeur hors tout de l'ensemble. Elle permet en outre de disposer d'un appui du ressort 6 s'étendant à l'aplomb du point de pénétration dans le sol du disque. Il en résulte un meilleur travail du sol.

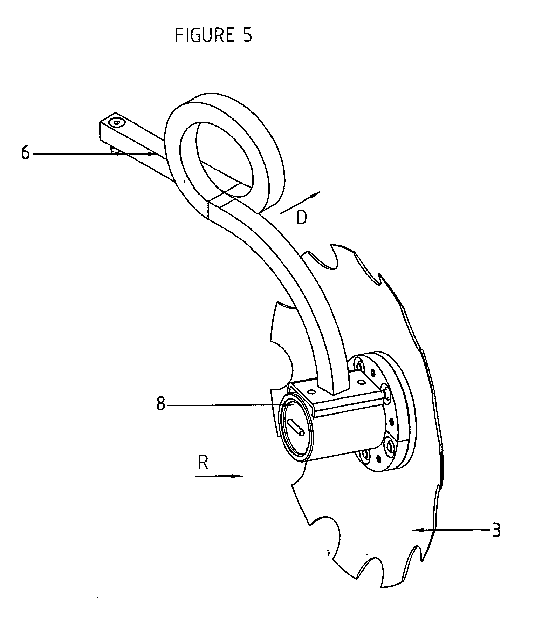

En conséquence, cette extrémité 6B du ressort est couplée à la partie du moyeu 8 s'étendant côté concave du disque 3 et est positionnée au voisinage de la face concave du disque 3, c'est-à-dire à l'opposé de l'extrémité libre dudit moyeu 8. Ce moyeu 8 est généralement couplé à cette extrémité à un flasque monté libre à rotation par rapport audit moyeu 8, la face concave du disque 3 étant boulonnée sur ce flasque. Cette disposition permet en outre, à l'aide du disque, de protéger le moyeu. Chaque disque 3 déchaumeur comporte généralement un angle d'entrure positif compris dans la plage [3 - 20] degrés, et un angle d'ouverture positif compris dans la plage [10 - 30] degrés. Chaque disque 3 déchaumeur est encore de préférence crénelé à sa périphérie. Les crénelures sont représentées en 9 aux figures. Du fait que chaque disque 3 déchaumeur présente, pour exercer sa fonction de déchaumage, au moins un angle d'ouverture et de préférence un angle d'entrure, il en résulte, lié à la présence de ces angles, l'exercice de contraintes R latérales généralement obliques qui tendent, lors du déplacement du disque dans le sol, à vouloir remettre droit et en ligne ce disque. Pour limiter l'effet de ces contraintes latérales et empêcher en particulier un dégagement latéral trop important du disque, la ou les spires du ressort hélicoïdal sont disposées par rapport au disque et enroulées dans une direction dans laquelle les flancs de la ou des spires se rapprochent (Direction D figure 5) les uns des autres sous l'action de cette contrainte R latérale de manière à limiter l'action de cette contrainte latérale notamment une fois les flancs en butée les uns contre les autres. Pour obtenir ce résultat, l'enroulement du ressort doit être de type hélicoïdal et non spiralé car au moins une zone de chevauchement ou de recouvrement partiel au niveau d'une spire ou entre les spires est nécessaire de manière à constituer une butée axiale par rapport aux contraintes latérales exercées par le disque. L'exercice de ces différentes forces est plus particulièrement visible à la figure 5 qui représente, de manière schématique, les contraintes R latérales exercées sur le disque et la résultante D au niveau des spires du ressort. On constate que la force D exercée s'étend depuis la branche du ressort reliée au disque vers la branche du ressort reliée au châssis qui constitue une butée. Pour parfaire cette action du ressort hélicoïdal et sa coopération avec les disques, de préférence, les flancs de la ou des spires viennent en contact d'appui les uns contre les autres, y compris en position de repos du ressort. Ainsi, on peut noter que le dispositif de sécurité obtenu au moyen du ressort hélicoïdal est un dispositif de sécurité de type asymétrique qui correspond parfaitement au travail du disque déchaumeur qui est lui-même soumis, lors de son travail, à des forces asymétriques. Ainsi, le ressort hélicoïdal coopère avec le disque pour résister aux contraintes latérales auxquelles est soumis le disque lors de l'avancement du châssis tout en autorisant un débattement latéral du disque en cas de rencontre avec un obstacle.

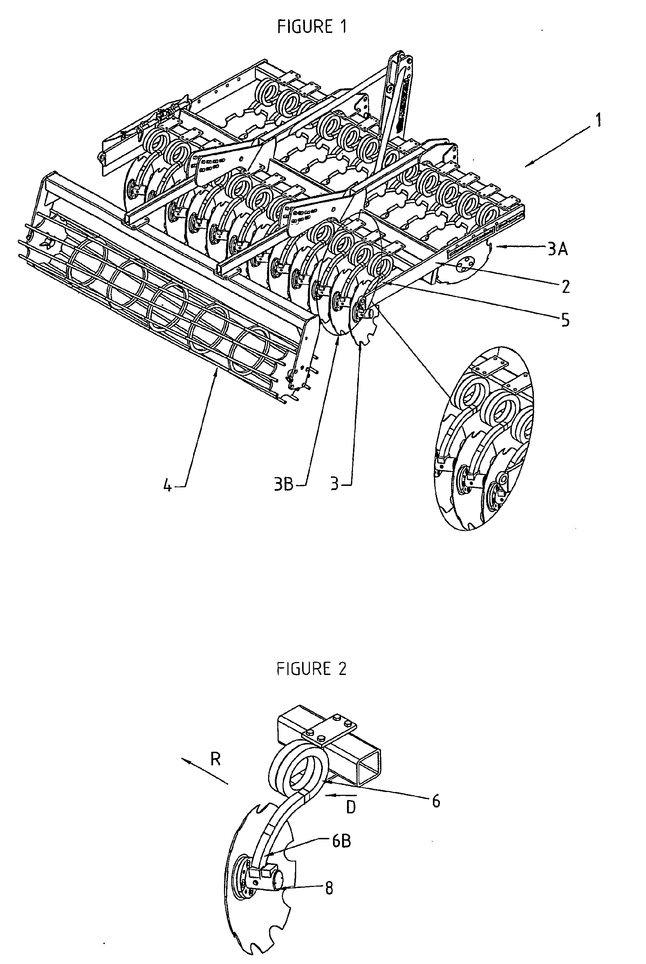

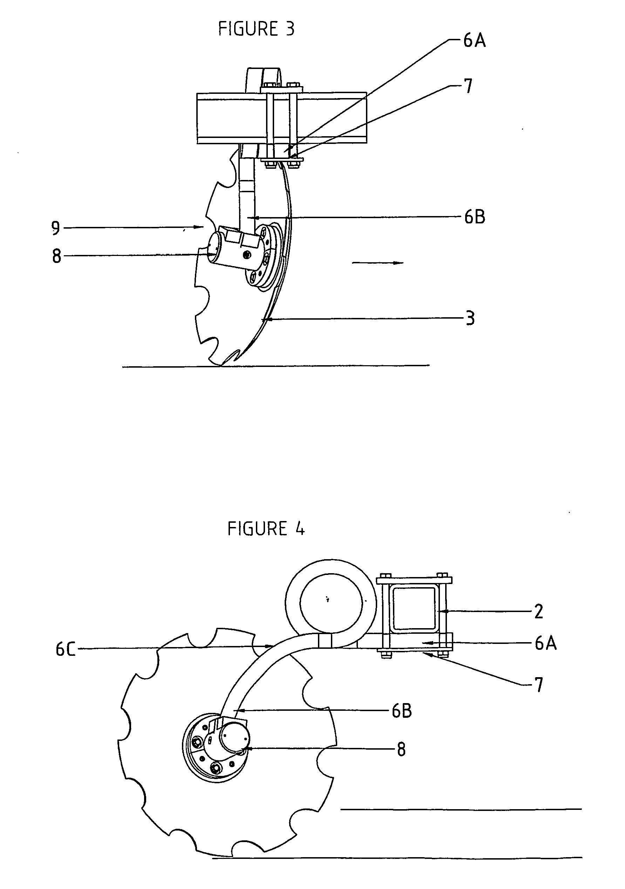

Dans les exemples représentés, cette déchaumeuse comporte, pris dans le sens d'avancement du châssis, au moins deux trains 3A, 3B successifs sensiblement parallèles de disques 3 déchaumeurs, les disques 3 déchaumeurs constitués de disques concaves présentant une concavité inversée d'un train de disques à un autre train de disques. Il en résulte la nécessité de réaliser des ressorts s'enroulant par exemple vers la gauche pour le train de disques avant et vers la droite pour le train de disques arrière. L'extrémité 6A du ressort 6 solidarisable au châssis 2 est généralement couplée à une platine 7 fixée par bridage à une poutre transversale du châssis comme l'illustrent en particulier les figures 2 et 3. Ce bridage s'effectue par exemple au moyen de vis et d'une platine s'étendant parallèlement à la platine 7 portant l'extrémité 6A du ressort. L'autre extrémité 6B du ressort 6 est quant à elle fixée généralement par soudage au moyeu 8 du disque 3. D'autres modes de fixation peuvent être envisagés. Ainsi, l'extrémité 6A du ressort 6 peut venir se loger dans un fourreau, lui-même fixé au châssis 2.

Chaque ressort 6 comporte de une spire et demi à cinq spires, lesdites spires étant disposées côte à côte de manière à former un alignement de spires le long d'une ligne transversale au châssis 2. Cette disposition des spires permet en outre de régler à volonté la rigidité latérale de cet ensemble. La spire terminale de chaque ressort 6 se prolonge de manière à former un départ de branche tangentielle, cette branche 6C s'étendant jusqu'au moyeu 8 de disque 3 en formant un arc de cercle à concavité tournée vers le sol comme l'illustrent en particulier les figures 2 et 4. Ce cintrage de la branche 6C permet d'empêcher un coincement de débris entre la branche 6C et le disque 3. En effet, du fait de cette forme particulière de la branche 6C du ressort 6 et des angles en particulier d'entrure et d'ouverture du disque 3, il en résulte un écartement maximal entre disque 3et branche 6C à ce niveau, d'où une réduction des risques de bourrage ou de colmatage de l'espace entre branche 6C et face concave du disque 3.

Dans les exemples représentés, chaque spire du ressort 6 est formée par enroulement d'un fil de section carrée bien que ce fil puisse être de forme de section quelconque. Ce ressort 6 est de préférence formé par déformation d'un fil de section comprise dans la plage [650 mm² - 2 600 mm²] pour un diamètre de disque compris dans la plage [480 mm - 700 mm].

Ainsi, la déchaumeuse décrite ci-dessus comporte autant de dispositifs de sécurité constitués par lesdits ressorts que de disques. La conception de ce dispositif de sécurité, fortement simplifiée par rapport au dispositif de sécurité de l'état de la technique, permet d'obtenir une machine de conception simple, d'usure réduite qui effectue un déchaumage de précision, c'est-à-dire à une profondeur sensiblement constante et à des vitesses particulièrement élevées de l'ordre de 10 à 30 km/heure.

## Revendications

1. Déchaumeuse (1) de précision du type comprenant un châssis (2) porté ou traîné, équipé d'outils (3) aratoires constitués d'au moins un train de disques déchaumeurs rotatifs non moteurs, ces disques (3) présentant chacun au moins un angle d'ouverture et étant montés respectivement indépendants et oscillants par rapport au châssis (2) porteur par l'intermédiaire d'un dispositif (5) de sécurité autorisant, lorsque la pression exercée sur le disque (3) est supérieure à une pression prédéterminée, un dégagement vertical du disque (3) et en deçà de ladite pression un retour du disque en position de travail, chaque disque (3) déchaumeur étant un disque concave relié au châssis (2) par un ressort (6) hélicoïdal formant au moins une spire, de préférence au moins une spire et demi, de manière à créer, au niveau du ressort, une zone de chevauchement, une extrémité (6A) du ressort (6) étant coupable directement ou par l'intermédiaire d'une pièce (7) de liaison au châssis (2), ce ressort (6) étant orienté de manière telle que la ou les spires dudit ressort (6) se resserrent par enroulement lorsque la pression exercée sur le disque (3) est supérieure à la pression prédéterminée en autorisant un effacement vertical du disque (3) par soulèvement **caractérisée en ce que** l'autre extrémité (6B) du ressort (6) est couplable au moyeu (8) du disque (3) et est disposée côté concave du disque.

2. Déchaumeuse selon la revendication 1,
**caractérisée en ce qu'**elle comporte pris dans le sens d'avancement du châssis au moins deux trains (3A, 3B) successifs sensiblement parallèles de disques (3) déchaumeurs, les disques (3) déchaumeurs constitués de disques concaves présentant une concavité inversée d'un train de disques à un autre train de disques.

3. Déchaumeuse selon l'une des revendications 1 et 2,
**caractérisée en ce que** chaque disque (3) déchaumeur présente au moins un angle d'ouverture et de préférence un angle d'entrure provoquant l'exercice de contraintes latérales généralement obliques sur le disque au cours de l'avancement du châssis et **en ce que** les flancs de la ou des spires du ressort hélicoïdal sont disposés par rapport au disque en tendant à se rapprocher les unes des autres sous l'action de cette contrainte latérale de manière à limiter l'action de cette contrainte latérale.

4. Déchaumeuse selon l'une des revendications 1 à 3,
**caractérisée en ce que** l'extrémité (6A) du ressort (6) solidarisable au châssis est couplée à une platine (7) fixée par bridage à une poutre transversale du châssis (2).

5. Déchaumeuse selon l'une des revendications 1 à 4,
**caractérisée en ce que** chaque ressort (6) comporte de une spire et demi à cinq spires, lesdites spires étant disposées côte à côte de manière à former un alignement de spires le long d'une ligne transversale au châssis (2).

6. Déchaumeuse selon la revendication 5,
**caractérisée en ce que** les flancs de la ou des spires de chaque ressort (6) sont en contact d'appui les uns contre les autres.

7. Déchaumeuse selon l'une des revendications 1 à 6,
**caractérisée en ce que** la spire terminale de chaque ressort (6) se prolonge de manière à former un départ de branche tangentielle, cette branche (6C) s'étendant jusqu'au moyeu (8) de disque (3) en formant un arc de cercle à concavité tournée vers le sol.

8. Déchaumeuse selon l'une des revendications 1 à 7,
**caractérisée en ce que** chaque spire du ressort (6) est formée par enroulement d'un fil de section carrée, ledit fil étant de préférence de section comprise dans la plage [650 mm² - 2 600 mm²] pour un diamètre de disque compris dans la plage [480 mm - 700 mm].

9. Dispositif de sécurité pour disque déchaumeur concave pour déchaumeuse du type comprenant un châssis (2) porté ou traîné, équipé d'outils (3) aratoires constitués d'au moins un train de disques déchaumeurs rotatifs non moteurs, ces disques (3) travaillant dans le sol suivant un terrage réglable, de préférence par l'intermédiaire d'au moins un organe (4) de référence, tel que patin, roue, rouleau couplé audit châssis et étant montés respectivement indépendants et oscillants par rapport au châssis (2) porteur, ce dispositif interposable entre le châssis (2) et le disque (3) de manière à autoriser, lorsque la pression exercée sur le disque (3) est supérieure à une pression prédéterminée un dégagement vertical du disque (3) et en deçà de ladite pression un retour du disque (3) en position de travail, étant constitué d'un ressort (6) hélicoïdal formé d'au moins une spire et demi, ce ressort (6), qui présente une première extrémité couplable directement ou par l'intermédiaire d'une pièce (7) de liaison au châssis (2) étant, à l'état monté du dispositif, orienté de manière telle que la ou les spires dudit ressort (6) se resserrent par enroulement lorsque la pression exercée sur le disque (3) est supérieure à la pression prédéterminée en autorisant un effacement vertical de l'outil du disque (3) par soulèvement,
**caractérisé en ce que** le ressort (6) présente une seconde extrémité couplée au moyeu (8) du disque (3) à sécuriser et disposée côté concave du disque (3) à sécuriser de manière à former un ensemble ressort/disque de faible encombrement.

10. Dispositif de sécurité selon la revendication 9, **caractérisé en ce que**, côté seconde extrémité, la spire terminale dudit ressort (6) se prolonge de manière à former un départ de branche tangentielle, cette branche (6C) s'étendant jusqu'au moyeu (8) du disque (3) en formant un arc de cercle à concavité tournée vers le sol.

11. Dispositif de sécurité selon l'une des revendication 9 et 10,
**caractérisé en ce que** chaque spire du ressort (6) est formée par enroulement d'un fil de section carrée, ledit fil étant de préférence de section comprise dans la plage [650 mm²- 2 600 mm²] pour un diamètre de disque compris dans la plage [480 mm - 700 mm].

## Claims

1. Precision disc tiller (1) of the type comprising a carried or towed chassis (2) and equipped with ploughing tools (3) made up of at least one line of non-driving, rotary, stubble-ploughing discs, the said discs (3) each having at least one angle of opening and being mounted so as to be respectively independent and oscillating in relation to the carrier chassis (2) via a safety device (5) which allows, when the pressure exerted on the disc (3) is greater than a predetermined pressure, a vertical disengagement of said disc (3) and, below the said pressure, a return of the disc into the working position, each stubble-ploughing disc (3) being a concave disc connected to the chassis (2) by a spiral spring (6) forming at least one turn, preferably at least one and a half turns, so as to create an overlapping zone at the spring, one end (6A) of said spring (6) being capable of being coupled to the chassis (2) either directly or via a linking piece (7), the said spring (6) being oriented in such a way that the turn or turns of the said spring (6) become tighter as a result of coiling when the pressure exerted on the disc (3) is greater than the predetermined pressure, allowing vertical removal of the disc (3) as a result of lifting,
**characterised in that** the other end (6B) of the spring (6) is capable of being coupled to the hub (8) of the disc (3) and is disposed on the concave side of said disc.

2. Disc tiller according to claim 1,
**characterised in that** it has, considered in the direction of forward movement of the chassis, at least two, substantially parallel, successive lines (3A, 3B) of stubble-ploughing discs (3), said stubble-ploughing discs (3), which are made up of concave discs, having a concavity which is reversed from one line of discs to another line of discs.

3. Disc tiller according to either of claims 1 and 2,
**characterised in that** each stubble-ploughing disc (3) has at least one angle of opening and preferably an angle of incision giving rise to the exerting of generally oblique lateral stresses on the disc during the forward movement of the chassis, and **in that** the flanks of the turn or turns of the spiral spring are disposed in relation to the disc so as to tend to come closer to one another under the effect of the said lateral stress so as to limit the effect of the said lateral stress.

4. Disc tiller according to one of claims 1 to 3,
**characterised in that that** end (6A) of the spring (6) which can be locked to the chassis is coupled to a plate (7) which is fixed, by clamping, to a transverse girder of said chassis (2).

5. Disc tiller according to one of claims 1 to 4,
**characterised in that** each spring (6) has from one and a half turns to five turns, the said turns being disposed side by side in such a way as to form a row of turns along a line transverse to the chassis (2).

6. Disc tiller according to claim 5,
**characterised in that** the flanks of the turn or turns of each spring (6) are in bearing contact against one another.

7. Disc tiller according to one of claims 1 to 6,
**characterised in that** the final turn of each spring (6) is prolonged in such a way as to form the start of a tangential branch, the said branch (6C) extending as far as the hub (8) of the disc (3) while forming an arc of a circle with a concavity which is turned towards the ground.

8. Disc tiller according to one of claims 1 to 7,
**characterised in that** each turn of the spring (6) is formed by the coiling of a square-section wire, the said wire preferably having a section which is contained within the range [650 mm² - 2,600 mm²] for a disc diameter which is contained within the range [480 mm - 700 mm].

9. Safety device for a concave stubble-ploughing disc for a disc tiller of the type comprising a carried or towed chassis (2) and equipped with ploughing tools (3) made up of at least one line of non-driving, rotary, stubble-ploughing discs, the said discs (3) working in the ground in accordance with an adjustable warping, preferably via at least one reference component (4) such as a skid, wheel or roller which is coupled to the said chassis, and being mounted so as to be respectively independent and oscillating in relation to the carrier chassis (2), the said device, which can be interposed between the chassis (2) and the disc (3) so as to allow, when the pressure exerted on the disc (3) is greater than a predetermined pressure, a vertical disengagement of said disc (3) and, below the said pressure, a return of the disc (3) into the working position, being made up of a spiral spring (6) consisting of at least one and a half turns, the said spring (6), which has a first end which is capable of being coupled to the chassis (2) either directly or via a linking piece (7), being oriented, when the device is in the mounted state, in such a way that the turn or turns of the said spring (6) become tighter as a result of coiling when the pressure exerted on the disc (3) is greater than the predetermined pressure, allowing vertical removal of the tool of the disc (3) as a result of lifting, **characterised in that** the spring (6) has a second end which is coupled to the hub (8) of the disc (3) to be secured and is disposed on the concave side of said disc (3) to be secured so as to form a compact spring/disc unit.

10. Safety device according to claim 9,
**characterised in that**, on the second end side, the final turn of the said spring (6) is prolonged in such a way as to form the start of a tangential branch, the said branch (6C) extending as far as the hub (8) of the disc (3) while forming an arc of a circle with a concavity which is turned towards the ground.

11. Safety device according to either of claims 9 and 10, **characterised in that** each turn of the spring (6) is formed by the coiling of a square-section wire, the said wire preferably having a section which is contained within the range [650 mm² 2,600 mm²] for a disc diameter which is contained within the range [480 mm - 700 mm].

## Patentansprüche

1. Präzisionsschälpflug (1) mit einem Aufsattel- oder Anhängefahrgestell (2), das mit Ackerwerkzeugen (3) ausgerüstet ist, die mindestens eine Achse mit nicht angetriebenen drehbaren Schälscheiben umfassen, wobei die Scheiben (3) jeweils mindestens einen Öffnungswinkel aufweisen und über eine Sicherheitsvorrichtung (5), die dann, wenn der auf die Scheibe (3) ausgeübte Druck einen vorbestimmten Druck übersteigt, ein vertikales Lösen der Scheibe (3) und bis zu dem Druck eine Rückstellung der Scheibe in die Arbeitsposition ermöglicht, voneinander unabhängig und schwingend relativ zu dem Aufsattelfahrgestell (2) angebracht sind, wobei jede Schälscheibe (3) eine konkave Scheibe ist, die über eine Schraubenfeder (6) mit mindestens einer Windung, vorzugsweise mit wenigstens anderthalb Windungen, mit dem Fahrgestell (2) verbunden ist, so dass an der Feder ein überdeckungsbereich geschaffen ist, wobei ein Ende (6A) der Feder (6) direkt oder über ein Verbindungsstück (7) mit dem Fahrgestell (2) verbindbar ist, wobei die Feder (6) so ausgerichtet ist, dass sich die Windung oder die Windungen der Feder (6) zusammenstauchen, wenn der auf die Scheibe (3) ausgeübte Druck einen vorbestimmten Druck übersteigt, und dabei ein vertikales Lösen der Scheibe (3) durch Anheben ermöglichen, **dadurch gekennzeichnet, dass** das andere Ende (6B) der Feder (6) mit der Nabe (8) der Scheibe (3) verbindbar ist und an der konkaven Seite der Scheibe angeordnet ist.

2. Schälpflug nach Anspruch 1, **dadurch gekennzeichnet, dass** er in Vorwärtsfahrtrichtung des Fahrgestells wenigstens zwei hintereinander liegende, im Wesentlichen parallele Achsen (3A, 3B) mit Schälscheiben (3) umfasst, wobei die Schälscheiben (3) konkave Scheiben sind, deren Konkavität der Konkavität der Scheiben der jeweils anderen Achse abgewandt ist.

3. Schälpflug nach einem der Ansprüche 1 und 2, **dadurch gekennzeichnet, dass** jede Schälscheibe (3) mindestens einen Öffnungswinkel und vorzugsweise einen Schnittwinkel aufweist, der bei Vorwärtsfahrt des Fahrgestells eine Ausübung von Seitenbelastungen hervorruft, die im Allgemeinen schräg auf die Scheibe wirken, und dass die Flanken der Windung oder der Windungen der Schraubenfeder so zu der Scheibe angeordnet sind, dass sie dazu neigen, sich unter Einwirkung der Seitenbelastung einander anzunähern, so dass die Einwirkung der Seitenbelastung begrenzt ist.

4. Schälpflug nach einem der Ansprüche 1 bis 3, **dadurch gekennzeichnet, dass** das mit dem Fahrgestell verbindbare Ende (6A) der Feder (6) mit einer Platte (7) verbunden ist, die an einem Querträger des Fahrgestells (2) angeflanscht ist.

5. Schälpflug nach einem der Ansprüche 1 bis 4, **dadurch gekennzeichnet, dass** das jede Feder (6) anderthalb bis fünf Windungen umfasst, die so nebeneinander angeordnet sind, dass sie entlang einer Querlinie zum Fahrgestell (2) eine Reihe von Windungen bilden.

6. Schälpflug nach Anspruch 5, **dadurch gekennzeichnet, dass** die Flanken der Windung oder der Windungen jeder Feder (6) aneinander anliegen.

7. Schälpflug nach einem der Ansprüche 1 bis 6, **dadurch gekennzeichnet, dass** die Endwindung jeder Feder (6) so verlängert ist, dass sie einen tangentialen Abzweig bildet, wobei sich der Abzweig (6C) bis zur Nabe (8) der Scheibe (3) erstreckt und dabei einen Kreisbogen mit zum Boden gerichteter Konkavität bildet.

8. Schälpflug nach einem der Ansprüche 1 bis 7, **dadurch gekennzeichnet, dass** jede Windung der Feder (6) durch Aufwickeln eines Drahtes mit quadratischem Querschnitt gebildet ist, wobei der Draht bei einem Scheibendurchmesser in einem Bereich [von 480 mm bis 700 mm] vorzugsweise einen Querschnitt in einem Bereich [von 650 mm² bis 2.600 mm²] aufweist.

9. Sicherheitsvorrichtung für eine konkave Schälscheibe für einen Schälpflug (1) mit einem Aufsattel- oder Anhängefahrgestell (2), der mit Ackerwerkzeugen (3) ausgerüstet ist, die mindestens eine Achse mit nicht angetriebenen drehbaren Schälscheiben umfassen, wobei die Scheiben (3) den Boden mit einer Arbeitstiefe bearbeiten, die vorzugsweise über ein mit dem Fahrgestell verbundenes Bezugselement (4), beispielsweise eine Kufe, ein Rad, eine Walze einstellbar ist, und voneinander unabhängig und schwingend zum Aufsattelfahrgestell (2) angebracht sind, wobei die Sicherheitsvorrichtung, die zwischen das Fahrgestell (2) und die Scheibe (3) einsetzbar ist, so dass sie dann, wenn der auf die Scheibe (3) ausgeübte Druck einen vorbestimmten Druck übersteigt, ein vertikales Lösen der Scheibe (3) und bis zu dem Druck eine Rückstellung der Scheibe in die Arbeitsposition ermöglicht, eine Schraubenfeder (6) mit mindestens anderthalb Windungen umfasst, wobei die Feder (6), die ein erstes Ende umfasst, das direkt oder über ein Verbindungsstück (7) mit dem Fahrgestell (2) verbindbar ist, bei eingebauter Sicherheitsvorrichtung so ausgerichtet ist, dass sich die Windung oder die Windungen der Feder (6) zusammenstauchen, wenn der auf die Scheibe (3) ausgeübte Druck einen vorbestimmten Druck übersteigt, und dabei ein vertikales Lösen der Scheibe (3) durch Anheben ermöglichen, **dadurch gekennzeichnet, dass** die Feder (6) ein zweites Ende aufweist, das mit der Nabe (8) der zu sichernden Scheibe (3) verbunden ist und an der konkaven Seite der zu sichernden Scheibe (3) angeordnet ist, so dass sie eine raumsparende Feder-Scheibe-Einheit bildet.

10. Sicherheitsvorrichtung nach Anspruch 9, **dadurch gekennzeichnet, dass** die Endwindung der Feder (6) auf der Seite des zweiten Endes so verlängert ist, dass sie einen tangentialen Abzweig bildet, wobei sich der Abzweig (6C) bis zu der Nabe (8) der Scheibe (3) erstreckt und dabei einen Kreisbogen mit zum Boden gerichteter Konkavität bildet.

11. Sicherheitsvorrichtung nach einem der Ansprüche 9 und 10, **dadurch gekennzeichnet, dass** jede Windung der Feder (6) durch Aufwickeln eines Drahtes mit quadratischem Querschnitt gebildet ist, wobei der Draht bei einem Scheibendurchmesser in einem Bereich [von 480 mm bis 700 mm] vorzugsweise einen Querschnitt in einem Bereich [von 650 mm² bis 2.600 mm²] aufweist.
